# EUROPEAN PATENT APPLICATION

(11) **EP 4 300 437 A2**
(43) Date of publication of application: **03.01.2024**
(21) Application number: 23181956.6
(22) Date of filing: 28.06.2023
(51) Int. Cl.: G06V 10/82, G06V 20/69, G06V 10/774

(54) **SYSTEM AND METHOD FOR CLASSIFYING MICROSCOPIC PARTICLES**

(30) Priority: 28.06.2022 US 202217851883
(71) Applicant: Yokogawa Fluid Imaging Technologies, Inc., Scarborough, ME 04074 (US)
(72) Inventor: Austin Venelinov, Daniels, Scarborough 04074 (US)
(74) Representative: Sach, Greg Robert

(57) **Abstract**

A system and method for classifying images of particles detected in a fluid. Particles images of a dataset are preprocessed through computer processing and analyze for classification with an Artificial Intelligence (AI) classifier to predict which of one or more pre-defined particle types are present in the particle images of the dataset. The AI classifier is trained with smart training data and a smart training method to enable enhanced recognition of variations between dataset particle images and one or more pre-defined particle types. Particle images are subject to extreme augmentation to facilitate robust classification performance. The invention includes detecting anomalies of the particle images of the dataset to detect images that are inconsistent with images known to be of the class the image is assigned during preliminary image classification. Fake particle images may be generated to improve the detection of anomalies of the particle images classified.

## Description

### BACKGROUND OF THE INVENTION

### 1. Field of the Invention.

The present invention relates to systems and methods for identifying and classifying microscopic particles detected in a flowing fluid. More particularly, the present invention relates to the application of machine learning to improve microscopic particle classification. Still more particularly, the present invention relates to the use of machine learning to enhance anomaly detection capability and thereby minimize particle misclassification.

### 2. Description of the Prior Art.

The identification of particles in a fluid is of great interest in a wide range of applications such as biopharmaceutical development, water quality monitoring, and marine research. Flow Imaging Microscopy (FIM) is an increasingly popular technique for microscopic particle characterization. FIM instruments, such as FlowCam^{®} instruments available from Yokogawa Fluid Imaging of Scarborough, Maine, capture light microscopy images as they flow through a microfluidic channel. The captured images, which can number in the thousands for a relatively small sample volume, can then be analyzed to assess the types of particles in the sample. Similar particle type analyses are also possible on other imaging methods such as backgrounded membrane imaging (BMI) and imaging flow cytometry (IFC).

Historically, particle images from FIM instruments and other high-throughput particle imaging modalities needed to be manually inspected by a human operator to identify and quantify the different particle types in the sample. However, researchers are increasingly interested in automated methods for determining the types of particles in a sample. While these imaging instruments often include some tools for performing this particle identification, there is significant room for improvement in their performance. Many of these tools rely on a finite set of particle properties measured by the instrument-properties that may not describe the most salient particle information in the image data for distinguishing between particle types. The measured values of these particle properties also strongly depend on the software used to segment particles in each image and, therefore, factors such as the instrument setup and the particle's transparency that can impact the performance of this segmentation algorithm. As a result, the performance of property-based particle identification tools can be highly instrument-, sample-, and operator-dependent.

Recently, artificial intelligence (AI) based methods have shown excellent early performance in identifying different particle types from FIM and other high-throughput particle imagers. These methods often use convolutional neural networks (CNNs) or other deep learning tools similarly optimized for image data as a particle image classifier-they accept a particle image and predict which of a finite list of particle types is present in the image. As these AI approaches analyze images directly, they often achieve superior particle identification to previous particle property-based methods. These more powerful models do come at the expense of being more resource-intensive to develop as they often require larger image datasets to develop than more traditional particle classification tools.

Despite using particle images directly, AI methods for image classification are not especially robust as they often only achieve optimal performance on the instrument and samples used to develop the model. Some of this limited robustness is a result of small training sets captured on a single instrument and a narrow selection of samples. The limited robustness can also be attributed to often limited approaches to regularize (i.e., help prevent overfitting) these AI utilities during training such as data augmentation. Without these safeguards, deep learning tools can often learn and use information in images that have no practical significance such as instrument artifacts and even random pixel noise patterns when trying to classify images. AI utilities that rely heavily on artificial information like imaging artifacts may achieve excellent performance under conditions like those used to develop the AI but are likely to fail when analyzing data outside these conditions. These issues can make it difficult to, for example, develop an AI classifier using particle images captured on one FIM instrument and effectively apply that classifier to image data from a second FIM instrument.

Another underlying issue limiting the robustness of AI-based particle classifiers is their performance in analyzing images of particle types that the classifier was not trained to recognize. Ideally, a classifier that analyzes images that are none of the classes it is trained to detect assigns a very low probability of that image being each class-model output that could easily be identified to filter out these images. However, this behavior rarely happens in practice as classifiers primarily learn to analyze images based on image features (i.e., patterns in image data) that are present in the data used to train the classifier and are useful for identifying those different image types. For instance, a classifier trained to differentiate images of dogs and cats may learn to recognize body parts like ears, eyes, and noses and how to differentiate between images of each animal based on those features. Images that are dissimilar from all of the image types a classifier is trained against may be missing many of these features and thus hindering the model's ability to correctly analyze the image. This results in classifiers assigning incorrect class probabilities to images far outside the training data, often resulting in the model assigning extremely high albeit erroneous class probabilities to these images. Counterintuitively, this effect is exaggerated the more dissimilar the image is from the training images; a dog vs cat classifier will be much more accurate at classifying a coyote as neither a dog nor a cat than an earthworm despite the latter sharing little resemblance to the other animals. This phenomenon makes it difficult for AI classifiers to be robust to images unlike those in the training set-a flaw that can compromise their performance in practice when the model is expected to accurately handle these anomalous images.

Anomaly detection or the ability to recognize images that are not any of the particle types a classifier is trained to recognize would significantly improve the robustness of these AI-based particle image analyzers. Few previous approaches have paired anomaly detection strategies with single-particle classifiers. One previous approach did develop a strategy revolving around CNN architectures commonly used for facial recognition to effectively analyze FIM images unlike those used to train the model. However, this approach is optimized to identify entire particle image datasets that are anomalous and not the individual anomalous particle images, limiting its applicability as a tool to improve particle classifier performance.

Typical AI-based particle image analysis tools offer severely limited robustness to data collected from different samples and on different instruments. This poor robustness greatly hinders the practical utility of these powerful image analysis tools especially given how resource-intensive these methods are to develop-if multiple AI models need to be developed to handle data from all instrument-sample configurations expected in practice the development cost may be difficult to justify regardless of the performance. What is necessary is a combination of smart AI model architectures and training strategies that, in combination with appropriate training datasets, can be used to develop highly robust AI classifiers for particle images from FIM and other high throughput particle images. A robust AI classifier would among other benefits be much easier to deploy in practice; a single AI tool could be trained to handle a common particle analysis task, distributed to different users, and immediately yield high classification performance on that task without requiring any additional user-specific data collection and model refinements.

### SUMMARY OF THE INVENTION

The object of the present invention is a system and method to provide architectures and training strategies for artificial intelligence (AI)-based image analysis tools to achieve accurate yet highly robust image classifications for particle images captured on FIM instruments or similar high-throughput particle imaging technologies. It is also an object of the system and method of the invention to provide image analysis that performs particle classification tasks accurately independent of the specific FIM instrument or other particle imaging apparatus employed. It is also an object of the invention to effectively perform a specific particle image analysis task in biotherapeutic particle analysis, drinking water monitoring, and/or marine research regardless of the exact sample being analyzed but not limited thereto. Further, it is an object of the invention to provide such a system and method that can be used to detect anomalies or images of particles that the classifier is not nominally trained to detect as an aspect of particle classification accuracy.

These and other objects are achieved with the present invention, which is a FIM system modified to include machine learning, which may also be referred to as Artificial Intelligence (AI), programming to accelerate the identification and classification of particles in a fluid, including in a non-transparent fluid. The invention includes a method for carrying out steps associated with the AI programming to perform the particle identification and classification. The method can use existing particle classification datasets but may also generate particle datasets for analysis, which can be useful for those fluid products having little prior characterization information for particles of interest.

Prior machine learning approaches for classifying FIM images were typically optimized for a specific particle imaging apparatus using a narrow set of sample types. The present invention includes a robust protein aggregate-silicone oil droplet identification tool developed using FIM data from one or more instruments and one or more sample types combined with extensive data augmentation and other model regularization strategies as well as anomaly detection tools. This particle analysis is a common use for particle imaging technologies in therapeutic protein formulation development and manufacturing. The resulting AI utility yields >90% particle classification accuracy on particles larger than 3 µm without requiring any instrument-specific or sample-specific AI training or refinements as current state-of-the-art methods would require. The result is that a broader range of users of AI-driven particle analysis is possible, including those without the extensive resource availability of large pharmaceutical companies to develop previous approaches.

The programming of the present invention further includes an anomaly detection function. The anomaly detection function is configured to identify captured particle images that are different from the particle types recognizable by the AI classifier, such as images of non-protein aggregate, non-silicone oil droplets particles, for example. This anomaly detection also uses many of the same training strategies as used in training the main AI classifier to ensure robust performance. This design results in an anomaly detection tool that is sensitive to obvious anomalies like calibration beads but will ignore more subtle anomalies in order to ensure robustness to changes in particle morphology due to instrument- or sample-induced variance.

The system of the present invention further includes a software integration function that facilitates the integration of particle analysis across FIM instruments from sample collection to data analysis. In one example, the dataset generated may be input to a dataset program, such as the VisualSpreadsheet^{®} product available from Yokogawa Fluid Imaging Technologies, which includes image storage, and analyze that data directly with the AI function described herein.

The invention is a system for classifying images of particles detected in a fluid. It includes a particle image capturing system configured to generate a dataset of particle images, a database including one or more pre-defined particle types, and a computing device in communication with the particle image capturing system and the database. The computing device is programmed with a machine learning function configured to preprocess the particle images of the dataset from the particle image capturing system for analysis, analyze the particle images for classification with an Artificial Intelligence (AI) classifier to predict which of the one or more pre-defined particle types are present in the particle images of the dataset, wherein the AI classifier is trained with smart training data and a smart training method to enable enhanced recognition of variations between dataset particle images and the one or more pre-defined particle types, and output a report of particle image classification for the dataset of particle images. The classifier may be a convolutional neural network. The particle image capturing system may be part of a FIM instrument. The database includes a training dataset that may include particle images from a plurality of FIM instruments. The computing device further includes a data augmentation function configured to augment data of the training dataset to build in additional simulated instrument and sample variation into the training dataset. The augmentation function includes one or more of random flipping, white noise addition, image brightness, color adjustment, image translation, image stretching, image shearing and image rotation. The system includes AI models configured with dropout layers set to eliminate intermediate image features between 10% and 80% and, preferably, between 40% and 60% of the time to promote learning image agnostic features. The computing device further includes an anomaly detection function, wherein the anomaly detection function is configured with an anomaly detection AI model arranged to detect inconsistencies between images assigned a preliminary classification and images that are known to be of the assigned class. The anomaly detection function is further configured to reclassify a flagged particle image into a second particle image type. The anomaly detection function may be embodied in a Variational AutoEncoder-Generative Adversarial Network (VAE-GAN) architecture. The VAE-GAN architecture is arranged to generate fake images of particle images to be classified, wherein the VAE-GAN architecture generates increasingly realistic fake images, and wherein the generated fake images are used by the anomaly detection function to improve the detection of anomalies of the particle images classified.

The invention is also a method for classifying images of particles detected in a fluid using a computing device programmed with non-transitory signals to implement machine learning functions. The method includes the steps of generating or obtaining a dataset of particle images, preprocessing the particle images of the dataset, analyzing the particle images for classification with an AI classifier to predict which of one or more pre-defined particle types are present in the particle images of the dataset, wherein the AI classifier is trained with smart training data and a smart training method to enable enhanced recognition of variations between dataset particle images and the one or more pre-defined particle types, and outputting a report of particle image classification for the dataset of particle images. The method further includes the step of augmenting data of a training dataset used for comparison with the particle images of the dataset to build in additional simulated instrument and sample variation into the training dataset. It also includes the step of detecting anomalies of the particle images of the dataset with an anomaly detection AI model arranged to detect images that are inconsistent with images known to be of the class the image is assigned during preliminary image classification. The method also includes the step of reclassifying into a second particle image type a particle image initially classified into a first particle image type. The method further includes the step of generating fake images of particle images to be classified, wherein the generated fake images are used to improve the detection of anomalies of the particle images classified.

The present invention includes the optional availability of an extensive dataset of images acquired across a plurality of instruments and a plurality of sample sets. The AI programming facilitates particle classification across those datasets as well as augmented datasets and other datasets generated by users. The AI programming is capable of identifying some particle types that are neither protein aggregates nor silicone oil droplets as an aspect of generating highly accurate and highly reliable reports of particle characterization in a sample, such as a biotherapeutic drug product sample. A user of the system and method of the present invention can acquire such information without the need for the user to generate training data beforehand. These and other advantages of the present invention are better understood upon review of the following detailed description, accompanying drawings, and appended claims.

### BRIEF DESCRIPTION OF THE DRAWINGS

FIG. 1 schematically illustrates a system for collecting images of particles in a fluid and analyzing those images using machine learning to classify particles in the fluid based on the collected images.
FIG. 2 is an enlarged perspective view of the optics and flow chamber of the system of FIG. 1.
FIG. 3 is a screen capture of VisualSpreadsheet^{®}, an example of software that can be used to select particle image data and use the image analysis method of this invention.
FIG. 4 is a screen capture of the data loading utilities used to select data to be loaded for image analysis
FIG. 5 is a screen capture of a Graphical User Interface (GLTI) for the image analysis described in this invention within VisualSpreadsheet^{®}
FIG. 6 is a simplified flow diagram showing the primary steps of the classification method of the invention.
FIG. 7 is an illustration of representative image augmentations used as part of training the classifier.
FIG. 8 is a simplified flow diagram of particle image processing for anomaly detection.
FIG. 9 is a representative illustration of an example set of captured images prior to the classification analysis of the present invention.
FIG. 10 is a representative illustration of an example set of capture images following classification but prior to anomaly detection.
FIG. 11 is a representative illustration of the example set of captured images after both classification and anomaly detection.

### DETAILED DESCRIPTION OF THE INVENTION

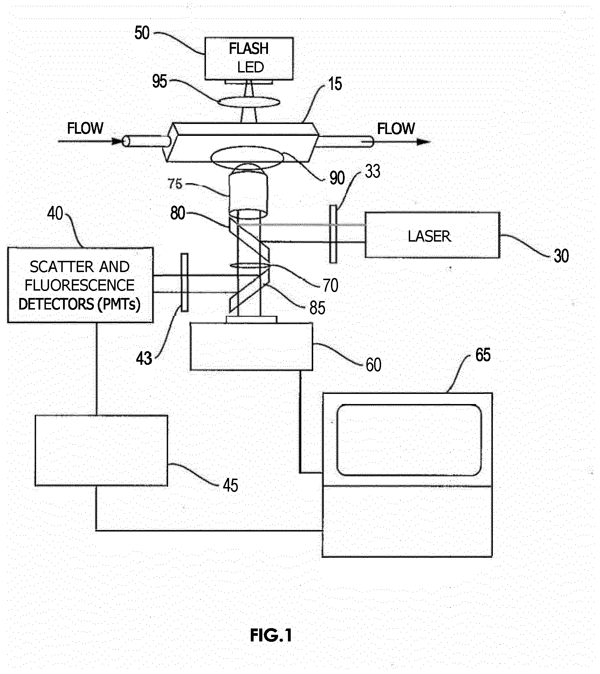

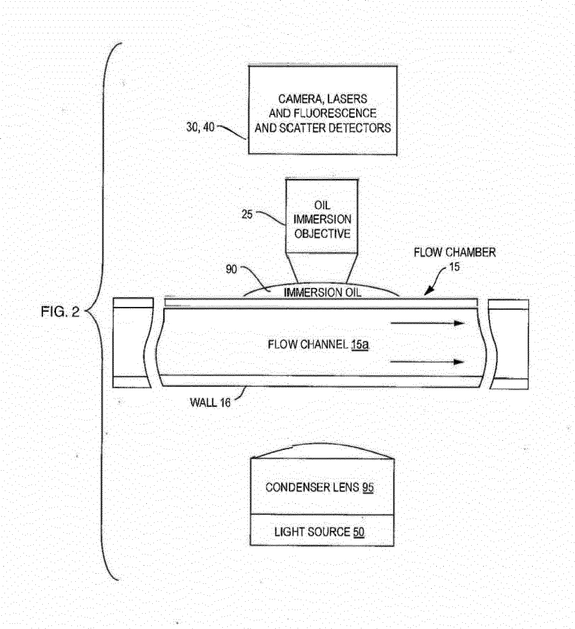

A FIM system 10 of the present invention suitable for high-quality imaging and analysis of particles that exist in a fluid is shown in FIGS. 1 and 2. The FIM system 10 includes a flow chamber 15, a light source 30, optics 35, an image detection system 40, a backlighting generator 50, an image capturing system 60, a computing device 65, a high NA objective 75, an optional immersion oil 90, and a high NA condenser lens 95. The combination of these components of the FIM system 10 arranged and configured as described herein enables a user to detect particles in the fluid, produce high-resolution images of those particles, and classify those particles with accuracy and reliability in a manner not enabled by existing FIM systems. The FlowCam^{®} product available from Yokogawa Fluid Imaging Technologies of Scarborough, Maine US is a suitable instrument to provide the features of system 10. Other FIM instruments may also be employed to capture images of particles in a flowing fluid. Aspects of the invention may also be implemented in other types of particle imaging and analysis instruments.

The flow chamber 15 includes an inlet 20 for receiving the particle-containing fluid to be observed, and an outlet 25 through which the fluid passes out of the flow chamber 15 after imaging functions have been performed. The flow chamber 15 is a low fluorescence structure. It may be a non-disposable, durable flow chamber fabricated of a material that does not readily fluoresce, including, for example, but not limited to, microscope glass or rectangular glass extrusions. It may also be a disposable flow chamber fabricated from materials including but not limited to glass or transparent plastics such as polyethylene. The flow chamber 15 may have a cross-section that is circular or rectangular in shape. The flow chamber 15 defines a channel 15a through which the fluid flows at a predetermined selectable rate. The channel 15a may be of rectangular configuration. The inlet 20 of the flow chamber 15 is connectable to a fluid source and the outlet 25 is connectable to a downstream means for transferring the fluid away from the flow chamber 15.

A light source 30 is used to generate scatter excitation light which is passed through the optics 35 to the flow chamber 15, resulting in particle light scatter. The light source 30 may be a laser 30 with an excitation filter 33. The laser 30 may be, but is not limited to being, a 470 nanometer (nm), 488 nm, 532 nm, or 633 nm solid state model laser available from an array of manufacturers known to those of skill in the art, but not limited thereto. The excitation filter 33 should at least have the characteristic of being able to transmit light at wavelengths longer than the wavelengths of light generated by the laser 30. An example of a suitable form of the excitation filter 33 is a 505DCLP longpass filter of the type that can be used with a 488 nm laser available from Chroma Technologies of Rockingham, Vermont US; those of skill in the art will recognize that other suitable filters may be employed for the excitation filter 33.

Particle fluorescence emissions from the flow chamber 15 may optionally be detected by the detection system 40, when including at least one or more emission filters 43 and one or more high sensitivity photomultiplier tubes (PMT) 44. The emission filters 43 should at least have the characteristic of being transparent to the fluorescence emissions of a desired fluorophone. An example of a suitable form of an emission filter 43 is a 570/40 phycoerithyn emission filter available from Chroma Technologies of Rockingham, Vermont US; those of skill in the art will recognize that other suitable filters may be employed for the emission filter 43. The PMTs 44 should at least have the characteristic of being sensitive to the fluorescence emissions desired. An example of a suitable form of a PMT 44 is the H9656-20 model available from the Hamamatsu company of Bridgewater, New Jersey US; those of skill in the art will recognize that other equivalent PMTs may be employed for the PMT 44. It is to be noted that an Avalanche Photodiode Detector (APD) may alternatively be used for emission detection rather than the PMT.

Output from the PMT 44 output is processed by detection electronics 45. Preferably, the detection electronics 45 includes user-adjusted gain and threshold settings which determine the amount of scatter required for the FIM system 10 to acknowledge a passing particle. The detection electronics 45 may be configured to receive input signals and produce output information compatible with the specific needs of the user of the FIM system 10.

If a sufficiently fluorescent particle passes through the flow chamber 15 a fluorescence signal from the PMT 44 if employed in the FIM system 10 is sent to the detection electronics 45, which then generates one or more trigger signals that are transmitted to the computing device 65. The FIM system 10 may also or alternatively be configured to conduct auto imaging steps wherein a triggering event is not required but image capture instead occurs automatically, such as periodically, sporadically, or selectively.

The computing device 65 is programmed to store the information received from the detection electronics 45 and to make calculations associated with the particles detected. For example, but not limited thereto, the computing device 65 may be programmed to provide specific information regarding the fluorescence of the detected particles, the shape of the particles, dimensions of the particles, and specific features of the particles. The computing device 65 may be any sort of computing system suitable for receiving information, running software programs on its one or more processors, and producing an output of information, including, but not limited to images and data, that may be observed on a user interface. The computing device 65 is further programmed to include a machine learning function configured to enhance particle classification for protein aggregates/silicon oil droplets compositions as described herein but not limited thereto

The detection electronics 45 may also be coupled, directly or indirectly through the computing device 65 to the backlighting generator 50. In particular, the detection electronics 45 and/or the computing device 65 may include an arrangement whereby a user of the system 10 may alternatively select a setting to automatically generate an image capture signal at a selectable time interval independent of possible detection of an occurrence that initiates image capture. The image capture signal generated activates the operation of the backlighting generator 50 so that a light flash is generated. Specifically, the backlighting generator 50 may be a Light Emitting Diode (LED) or other suitable light generating means that produces a light of sufficient intensity to backlight the flow chamber 15 and image the passing particles. The very high intensity LED flash may be a 670 nm LED flash, or a flash of another other suitable wavelength, which is flashed on one side of the flow chamber 15 for 200 µsec (or less). At the same time, the image capturing system 60 positioned on the opposing side of the flow chamber 15 is activated to capture an instantaneous image of the particles in the fluid as "frozen" when the high intensity flash occurs. The image capturing system 60 is arranged to transfer captured images to the computing device 65 for analysis. The image capturing system 60 includes characteristics of a digital camera or an analog camera with a framegrabber or other means for retaining images. For example, but in no way limiting what this particular component of the FIM system 10 may be, but is not limited to being, a CCD firewire, a CCD USB-based camera, or other suitable device that can be used to capture images.

The optional immersion oil 90 is arranged to be in contact with an exterior surface 16 of wall 17 of the flow chamber 15 and in contact with the lens of the high NA objective 25 when the FIM system 10 is in use. The immersion oil 90 has an index of refraction (n) selected to substantially match that of the wall 17 of the flow chamber 15 through which the fluid image is to be captured by the image capturing system. The immersion oil 90 may be ibidi immersion oil from ibidi of Fitchburg, Wisconsin but not limited thereto.

The high NA condenser lens 95 aids in clear illumination of that section of the fluid in the flow channel 15a that is to be imaged by focusing the high intensity flash from the backlighting generator 50 to that section. The high NA condenser lens 95 includes characteristics of a numerical aperture of about 1.25 and may be the AA2354932 1.25NA Abbe condenser available from Motic Incorporation Ltd. of Hong Kong. The high NA objective 75 is arranged to focus the illuminated image to the image capturing system 60. The high NA objective 75 also focuses fluorescence excitation light from the light source 30 onto the flow chamber 15. Further, the high NA objective 75 focuses the resulting particle fluorescence or scattered light onto the PMTs 40 of the detection system 40. The high NA objective 75 includes a lens 76 arranged to optionally be immersed in the optional immersion oil 90 during imaging processes. The high NA objective 75 is selected to have a range of focus or "working distance" which ensures that focus is substantially maintained through the entirely of the cross section of the flow channel 15a. Further, the high NA objective 75 includes characteristics of a numerical aperture greater than 0.7 and may be the EF Plan 100X/1.25NA available from Motic Incorporation Ltd. of Hong Kong.

The computing device 65 is configured with a set of functions established with one or more computer programs that enable the performance of functional steps associated with the method described herein. The computing device 65 may be configured as local or remote computing means, such as one or more central computers, such as one or more servers in a local area network, a metropolitan area network, a wide area network, or through intranet and internet connections.

The computing device 65 may include one or more discrete computer processor devices. Examples of known computer processing devices that may be suitable for use in carrying out the functions of the invention include, but are not limited to, personal computers, server computers, hand-held or laptop devices, cellular phones including smartphones, multiprocessor systems, microprocessor-based systems, set-top boxes, programmable consumer electronics, network PCs, minicomputers, mainframe computers, distributed computing environments that include any of the above systems or devices, and the like. The computing device 65 may be operated by one or more users, such as through a desktop, laptop, or servers, and/or one or more providers of services corresponding to one or more functions of the invention.

One or more relational databases may form part of or be associated with the computing device 65. The relational database of the present invention is used for gathering, storing, and making accessible particle image information acquired using the FIM system 10 or from other sources. For the purpose of the description of the present invention, a database is a collection of stored data that are logically related. Although there are different types of databases, and the database of the present invention may be any of such types, it is preferably a relational database with a relational database management system, comprising tables made up of rows and columns. Data stored in the relational tables are accessed or updated using database queries submitted to the database system. The database may be populated and updated with information provided by an application provider capable of carrying out one or more of the steps associated with the method of the invention.

Improved particle image classification provided by the method of the present invention may be described in the general context of computer-executable instructions, such as program modules, being executed by the computing device 65. Generally, program modules include routines, programs, objects, components, data structures, etc. that perform particular tasks or implement particular abstract data types. As indicated above, the FIM system 10 and the method of the present invention may also be practiced in distributed computing environments where tasks are performed by remote processing devices that are linked through a communications network or other data transmission medium. In a distributed computing environment, program function modules and other data may be located in both local and remote computer storage media including memory storage devices. Storage of program instructions and database content may thereby be cloud-based as they can be stored on remote servers and accessed through internet-based connections.

The computer processor and interactive drives, memory storage devices, databases and peripherals may be interconnected through one or more computer system buses. The system buses may be any of several types of bus structures including a memory bus or memory controller, a peripheral bus, and a local bus using any of a variety of bus architectures. The computing device 65 may include a variety of computer-readable media. Computer-readable media can be any available media that can be accessed by one or more processors of the computing device 65 and includes both volatile and non-volatile media, removable and non-removable media. By way of example, and not limitation, computer-readable media may comprise computer storage media and communication media. Computer storage media includes volatile and non-volatile, removable, and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by the computer system. The computing device 65 may also include computer storage media in the form of volatile and/or non-volatile memory such as Read-Only Memory (ROM) and Random-Access Memory (RAM). RAM typically contains data and/or program modules that are accessible to and/or operated on by one or more processors of the computing device 65. That is, RAM may include application programs, such as the particle image analysis functions of the present invention, and information in the form of data.

A user may enter commands and information into the computing device 65 through input devices such as a keyboard, a touchpad, or a pointing device such as a mouse. Other input devices may include a microphone, joystick, game pad, satellite dish, scanner, or the like. These and other input devices are connected to the computer processor through the system bus, or other bus structures, such as a parallel port, game port or a universal serial bus (USB) but is not limited thereto. A monitor or other type of display device is also connected to the computing device 65 through the system bus or other bus arrangement.

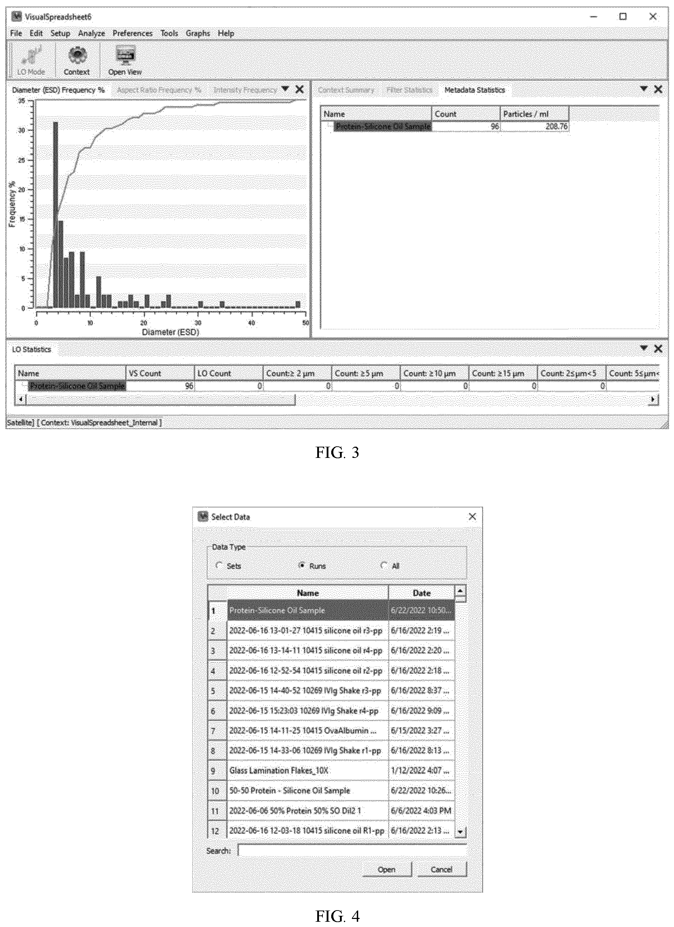

The computing device 65 may be configured and arranged to perform the described functions and steps embodied in computer instructions stored and accessed in any one or more of the manners described. The functions and steps, such as the functions and steps of the present invention described herein, individually or in combination, may be implemented as a computer program product tangibly as non-transitory computer-readable signals on a computer-readable medium, such as any one or more of the computer-readable media described. Such computer program product may include computer-readable signals tangibly embodied on the computer-readable medium, where such signals define instructions, for example, as part of one or more programs that, as a result of being executed by one or more processors of the computing device 65, instruct the computer processor(s) to perform one or more processes or acts described herein, and/or various examples, variations and combinations thereof. Such instructions may be written in any of a plurality of programming languages, for example, VisualSpreadsheet^{®} (see FIG. 3) available from Yokogawa Fluid Imaging Technologies of Scarborough, Maine, US. Other languages include Python, XML, Java, Visual Basic, C, or C++, and the like, or any of a variety of combinations thereof. The computer-readable medium on which such instructions are stored may reside on one or more of the components described above and may be distributed across one or more such components.

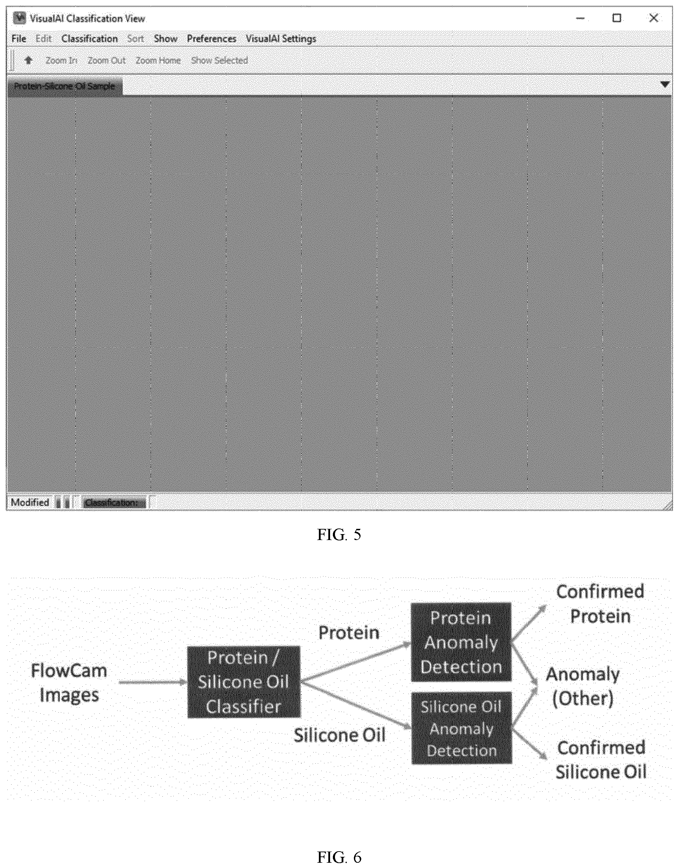

The AI image analysis described here is used to analyze datasets of particle images captured on the FIM system 10 selected from a system database. The data selection function may be configured in a data processing construct, such as the VisualSpreadsheet tool shown in FIG. 3 but not limited thereto. This description of the invention refers to use of the VisualSpreadsheet tool but is not limited to that tool. To begin a dataset analysis, a user loads one or more image datasets from the system database using VisualSpreadsheet's or an equivalent software's standard data loading utilities. FIG. 4 is a screenshot of VisualSpreadsheet's data loading utilities. AI utilities within the same piece of software can then be accessed to analyze the open datasets. FIG. 5 is a screen capture of the GUI for these AI utilities within VisualSpreadsheet.

The AI utilities within VisualSpreadsheet or equivalent software are configured to perform deep learning-based image analysis on datasets of FIM image data. This analysis is performed in three steps. In the first step, FIM images are preprocessed to ensure the images can be effectively analyzed by the AI utilities. This preprocessing typically but not necessarily includes image resizing in which the length, width, and color depth (i.e., whether the images are single-channel grayscale images or multichannel color images with or without a transparency channel) are adjusted to fixed values required by the AI utilities. For FIM image data from typical biotherapeutic samples, this preprocessing can be configured to cast FIM images as 32 pixel x 32 pixel grayscale images. Images with at least one dimension smaller than the corresponding image size can be padded with extra pixels to the required size while images with at least one dimension larger than the target size can be cropped to the desired size. Color FIM images can be cast to grayscale for AI analysis.

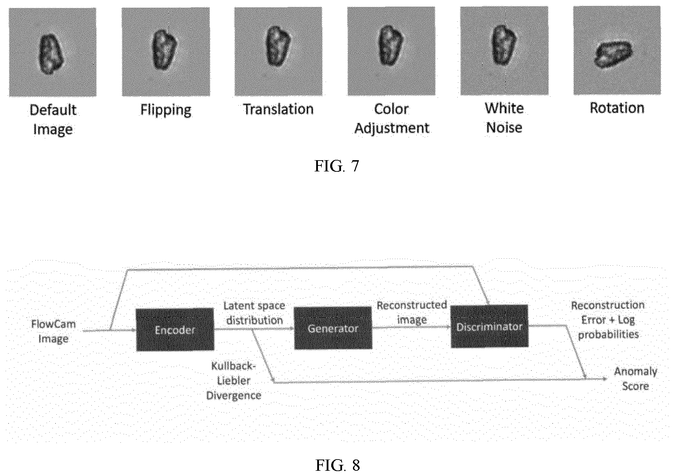

Once the images of the dataset(s) are preprocessed as needed, the images are analyzed using several AI or similar machine learning-based approaches to classify particle images as one of a finite list of particle types or an "other" particle type. A schematic of this approach as implemented for analyzing protein-based biotherapeutics containing protein aggregates and silicone oil droplets is shown in FIG. 6. The first machine learning step of the analysis involves analyzing the images via an initial AI classifier. This classifier is typically a convolutional neural network (CNN) but can instead be similar AI or machine learning tools developed for image analysis (e.g., image transformers). The classifier analyzes each preprocessed image and predicts which of several pre-defined particle types are present in the image. For a protein-based biotherapeutic particle analysis like that shown in FIG. 6, these particle types may be protein aggregates and silicone oil droplets. Unlike previous classifiers for this image analysis, the classifier described here is trained using a combination of smart training data design and training methods to help the classifier be more robust to common sources of variation between FIM images captured on different instruments. The dataset used to train the classifier includes FIM image data collected from several biotherapeutic samples on several equivalent FIM instruments 10 to build in instrument and sample variation into the training dataset. This varied dataset is paired with extreme data augmentation strategies including one or more of random flipping, white noise addition, image translation, image brightness and color adjustments, image stretching and shearing, and up to 360° image rotation. FIG. 7 illustrates several of these image augmentations on a sample FIM image.

The AI classifier may be further configured with dropout layers, layers that periodically and randomly set the outputs of intermediate neural network layer outputs to zero at a user-defined rate between 10-80% of the time. Dropout layers after each convolutional and fully connected layer that zero out these intermediate "image features" at higher-than-average but still reasonable rates (i.e., between 40-60%) can help force the neural network to learn instrument and sample agnostic image features while ensuring that the model's parameters can converge on values that yield effective classifications during training. The combination of extreme image augmentation and dropout helps mask instrument-dependent image artifacts and requires the network to learn several instrument-agnostic image features that differentiate the different particle types the network is trained to detect. In conjunction with the multi-instrument training set, this training strategy results in AI classifiers that are better optimized than previous approaches to achieve consistently high accuracy when analyzing image data from most FIM instruments.

The final step of the image processing is analyzing the classified images with a second set of AI utilities designed to confirm the classifications yielded by the previous AI model. These utilities consist of one anomaly detection AI model per class that the previous classifier can return. For the protein aggregate-silicone oil droplet classifier described in FIG. 6, two anomaly detection models are trained: one for analyzing images that were classified as protein aggregates and one for analyzing images that were classified as silicone oil droplets. Each of these particle type-specific anomaly detectors is designed to flag images that were classified as that particle type in the previous step but are inconsistent with the particle morphology expected from that particle type-a common issue when analyzing images that do not resemble any of the particle types an AI classifier was trained on. These flagged images will then be assigned an "other" (i.e., an anomaly) label by the software. As each anomaly detector can remove some non-anomalous images due to errors, this analysis step can be skipped within the software on datasets that are unlikely to contain large numbers of anomalous images.

FIG. 8 shows the general structure of each anomaly detector. These anomaly detectors are based on a variational autoencoder-generative adversarial network (VAE-GAN) architecture. This architecture is a fusion of two popular tools for generating images: variational autoencoders (VAEs) and generative adversarial networks (GANs). Both of these approaches are designed to take values sampled from a small number (e.g., 64) of standard normally distributed latent variables (the "prior" distribution for VAEs) and convert them to a "fake" image. In order for these approaches to generate realistic-looking "fake" images, both approaches also train auxiliary AI tools to help generate more convincing fake images-tools that can be repurposed for identifying anomalous images. While VAEs and GANs have different strengths and weaknesses for anomaly detection applications, combining these methods together as a VAE-GAN helps overcome many of the weaknesses with the individual approaches.

GANs learn to generate images from latent variables using two AI models: a generator model trained to generate fake images from randomly sampled latent space values and a discriminator model trained to differentiate the images used to train the model from the "fakes" made by the generator. The discriminator is set up as a binary classifier that returns the probability that an inputted image is an actual image. These networks are trained in an adversarial fashion: the generator is trained to create images that appear more realistic to the discriminator and the discriminator is trained to differentiate training images from increasingly-realistic fake images created by the generator. To achieve this behavior, the discriminator is trained to minimize a standard cross-entropy loss in which real images are assigned high probabilities and fake images are assigned low probabilities. The generator is in parallel trained to maximize the log probabilities the discriminator returns for fake images. This training process results in a discriminator that can effectively distinguish between the image data used to train the AI and other "anomalous" images. However, it is difficult to train a generator model to generate a wide variety of image types matching that present in the training data and, in extreme cases, the generator model can collapse onto a poor solution in which it is only able to generate variations on a single highly realistic image. This issue could in turn harm the robustness of the discriminator as it has only been trained against a small number of out-of-training set images.

VAEs use a similar two AI model structure to train the image generation: a generator model like that used in GANs and an encoder model. The generator model is usually called a "decoder" model in the context of VAE models but is here referred to as a generator for sake of terminology consistency. The encoder model accepts images from the training set and returns a "posterior" distribution of latent space values for that training set image. The generator can sample latent space values from this posterior distribution and use the values to generate a reconstructed training set image, a fake image that ideally resembles the initial training set image. The parameters of both models are trained to minimize the pixel-by-pixel reconstruction error between a training image and the reconstructed image created by the generator. The models are also trained to minimize the Kullback-Liebler divergence between the posterior distribution used to generate the reconstructed image and the standard normal prior distribution. Anomalous images can be identified by trying to reconstruct the image using these models; if an image does not resemble those used to train the model the reconstruction will either not be accurate or require latent space values that are highly unlikely under the normal prior distribution. This reconstruction approach helps ensure that the approach can effectively generate and thus analyze the variety of images encountered in the data used to train the model. However, the pixel-by-pixel reconstruction error is a relatively unsophisticated measure of image similarity and can be prone to issues when trying to identify some types of anomalies. For instance, a VAE that is trained on FIM images will often have an easier time recognizing anomalous images that contain large, high contrast particles than anomalous images that do not contain any particles as even a poorly reconstructed "blank" image will have much lower reconstruction errors than similarly poor reconstruction of a complex particle.

VAE-GANs like those in FIG 8 can be thought of as a GAN with an added encoder model borrowed from the VAE architecture. Like GANs, VAE-GANs involve training a discriminator model to differentiate between images from the training set and images created by the generator model. However, the fake images used to train this discriminator consist not only of images generated from randomly sampled latent space values but also reconstructed versions of training set images created using the encoder-generator models like a VAE. The discriminator model is also modified not only to output the probability that an inputted image is from the training set but also to return the output of an intermediate layer of the discriminator. The error in this intermediate "image feature" output between training set images and their reconstructions can be used as a measure of reconstruction accuracy instead of the pixel-by-pixel error used in the original VAE formulation. The encoder and discriminator are trained to minimize similar loss functions as before but modified to use the discriminator-learned image representation errors and the log probabilities of additional reconstructed "fake" images, respectively. The generator is trained to minimize the sum of the modified reconstruction error with the negative log probabilities the discriminator returns for each image-the loss functions for the generator in VAEs and GANs, respectively.

While significantly more complex than the component approaches, the combination of approaches in VAE-GANs helps solve some of the issues VAEs and GANs have for anomaly detection applications for FIM image anomaly detection. Training a generator model based on a combined VAE and GAN loss helps the generator return a wider variety of images than a GAN-based strategy alone, yielding discriminator models that are robust to a wider variety of particle types and making the GAN-style models easier to train overall. The discriminator-learned image representations also offer a much more sophisticated measure of image content than the raw pixel values, not only helping the encoder and generator create more effective reconstructions but mitigating some of the issues pixel errors have as an anomaly detection metric especially for detecting common FIM image artifacts.

To train the anomaly detection models used in the approach shown in FIG 6, a unique VAE-GAN is trained on FIM images of each particle type the classifier AI was trained on and that particle type alone. Training a VAE-GAN in this fashion results in an encoder-generator pair that can accurately reconstruct images of only that particle type and as well as a discriminator model that can effectively differentiate images of that particle type from images of other objects. These models are trained using the same training data and many of the same data augmentations as the AI classifier to ensure model robustness. With reference to FIG 8, the sum of the different components of the loss function for the model-the Kullback-Liebler divergence of the posterior distribution from the encoder and the prior, the discriminator-informed reconstruction error, and the log probabilities returned by the discriminator for both the initial and reconstructed images-is used as an anomaly score for each image. Higher values of this score indicate images increasingly dissimilar from the training data and thus more likely to be anomalous. Values of this anomaly score over the training set are used to set a threshold score that can be used to identify anomalous images with some false positive rate (e.g., values between 0.01-10%, typically 0.1-5%) for the anomaly detection. This false-positive error rate can either be fixed or user-defined. Subsequent images can then be analyzed by the trained VAE-GAN to compute an anomaly score which can be compared against this threshold to identify anomalous images.

A final output of the AI analysis utilities is the predicted class for each image analyzed-including "other" if the anomaly detection was enabled and an image does not contain any of the particle types the AI utilities were trained on. In the case of AI utilities developed for protein-based biotherapeutic, these classes may include: protein aggregate, silicone oil droplet, and, optionally, "other" (i.e., non-protein aggregate, non-silicone oil droplet images). Due in large part to the large dataset and extensive data augmentation, these AI tools achieve high accuracy even on FIM instruments and sample types outside the training set. For example, a protein therapeutic AI classifier like that in FIG. 6 can achieve approximately 90% classification accuracy on images of protein aggregates and silicone oil on a variety of protein formulations and FlowCam^{®} instruments. The anomaly detection for this approach also offers >90% recognition of calibration beads and air bubbles in a dataset while offering low false-positive error rates on images of protein aggregates and silicone oil droplets, respectively.

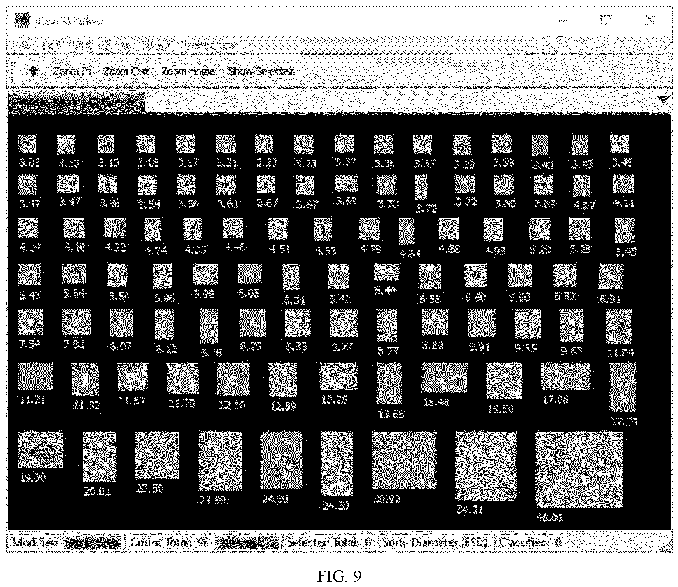

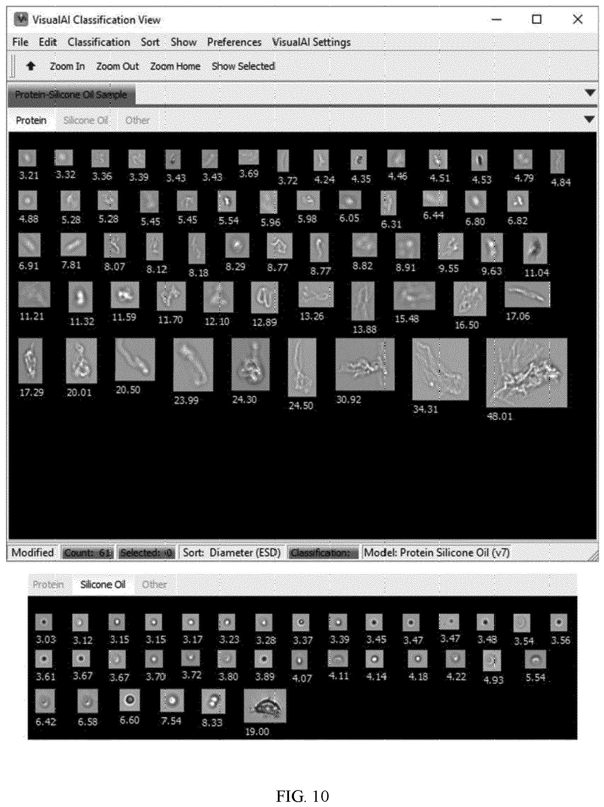

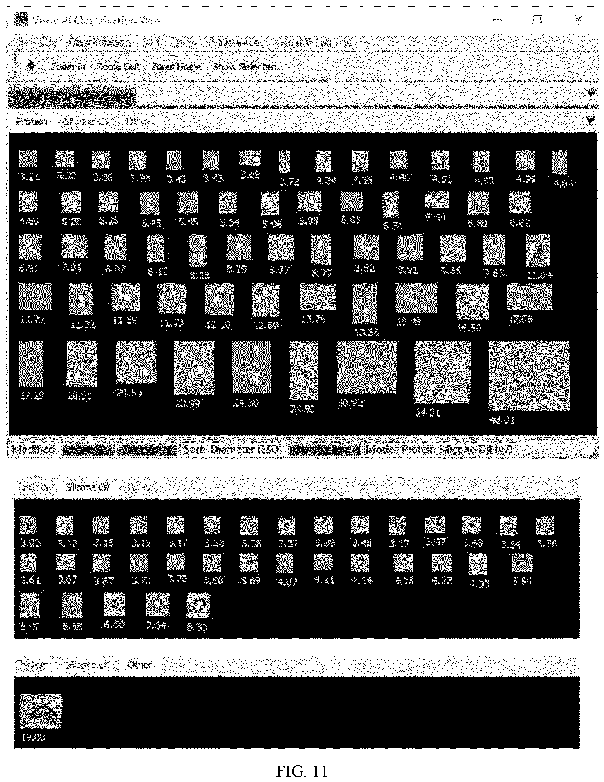

The assigned labels are then used to sort images of a single identified class together in the user interface for the AI utilities as well as to compute the number and concentration of each particle type in a sample. The software is further optionally configured to enable users to manually refine the initial image classifications returned by the software, updating the reported particle concentrations and compositions with each change. These refinements can include resorting misclassified images as well as assigning anomalies with a similar structure (e.g., glass flakes, air bubbles) to new user-defined classes and subclasses. FIGS. 9-11 represent the outcome of using the AI modeling of the present invention to classify particles. Specifically, FIG. 9 shows a set of 96 particle images that have been captured, among them protein particles, silicone oil droplets, and any "other" particles. Upon completion of the classification method of the invention, those three particle types have been classified as shown in FIG. 10. Subsequent analysis via the anomaly detection method yields the classifications shown in FIG. 11. Here, the anomaly detection identifies an abnormal particle identified as a silicone oil droplet by the classifier and assigns that particle image an "other" label.

Several variations of the AI utilities presented here are possible. The instrument- and sample-agnostic image analysis tools described here can be fine-tuned on data from a single instrument and sample type to improve the classification performance on that instrument and sample. Classes can be added and/or removed from the AI classifier along with a class-appropriate anomaly detector to improve or change the context of the utilities. For example, particle types such as calibration beads, air bubbles, and glass flakes can be added to the protein therapeutic-specific classifier in FIG 6. The anomaly detection can also be performed before classification using a VAE-GAN trained on all particle types to be identified by the classifier. This approach reduces the analysis complexity and may improve analysis times but may result in suboptimal anomaly detection performance. VAE-GANs trained on multiple particle types could be used to develop a hybrid approach in which classifiers (AI-based or otherwise) can be trained on intermediate VAE-GAN output without updating the VAE-GAN's parameters during training. While a classifier trained in this fashion would offer worse classification performance than an end-to-end trained classifier, it would greatly simplify training additional classifiers to perform other image analysis tasks such as differentiating between images of different types of protein aggregates. This approach would be especially useful for users without access to computational resources typically required to develop AI-based classification utilities as training a simple classifier on this intermediate VAE-GAN output may require smaller training datasets and fewer computational resources than training a classifier end-to-end with raw particle image data. Data visualization and other image analysis tasks may be possible using this intermediate VAE-GAN output.

## Claims

1. A system for classifying images of particles detected in a fluid, the system comprising:
- a particle image capturing system configured to generate a dataset of particle images;
- a database including one or more pre-defined particle types; and
- a computing device in communication with the particle image capturing system and the database, wherein the computing device is programmed with a machine learning function configured to:
- preprocess the particle images of the dataset from the particle image capturing system for analysis;
- analyze the particle images for classification with an Artificial Intelligence (AI) classifier to predict which of the one or more pre-defined particle types are present in the particle images of the dataset, wherein the AI classifier is trained with smart training data and a smart training method to enable enhanced recognition of variations between dataset particle images and the one or more pre-defined particle types; and
- output a report of particle image classification for the dataset of particle images.

2. The system of Claim 1 wherein the classifier is a convolutional neural network.

3. The system of Claim 1 wherein the particle image capturing system is part of a Flow Imaging Microscopy (FIM) instrument.

4. The system of Claim 3, wherein the database includes a training dataset including particle images from a plurality of FIM instruments.

5. The system of Claim 4 wherein the computing device further includes a data augmentation function configured to augment data of the training dataset to build in instrument and sample variation into the training dataset.

6. The system of Claim 5 wherein the augmentation function includes one or more of random flipping, white noise addition, image brightness, color adjustment, image translation, image stretching, image shearing and image rotation.

7. The system of Claim 5 further comprising AI models configured with dropout layers set to eliminate intermediate image features between 10% and 80% and, preferably, between 40% and 60% of the time to promote learning sample and instrument agnostic features.

8. The system of Claim 1 wherein the computing device further includes an anomaly detection function, wherein the anomaly detection function is configured with an anomaly detection AI model arranged to detect inconsistencies between images assigned a preliminary classification and images that are known to be of the assigned class.

9. The system of Claim 8 wherein the anomaly detection function is further configured to reclassify a flagged particle image into a second particle image type.

10. The system of Claim 8 wherein the anomaly detection function is embodied in a Variational AutoEncoder-Generative Adversarial Network (VAE-GAN) architecture.

11. The system of Claim 10 wherein the VAE-GAN architecture is arranged to generate fake images of particle images to be classified, wherein the VAE-GAN architecture generates increasingly realistic fake images, and wherein the generated fake images are used by the anomaly detection function to improve the detection of anomalies of the particle images classified.

12. The system of Claim 1 wherein the system is configured to classify into two different particle image types, protein aggregate particle images and silicone oil droplet particle images.

13. A method for classifying images of particles detected in a fluid using a computing device programmed with non-transitory signals to implement machine learning functions, the method comprising the steps of:
- generating a dataset of particle images;
- preprocessing the particle images of the dataset;
- analyzing the particle images for classification with an Artificial Intelligence (AI) classifier to predict which of one or more pre-defined particle types are present in the particle images of the dataset, wherein the AI classifier is trained with smart training data and a smart training method to enable enhanced recognition of variations between dataset particle images and the one or more pre-defined particle types; and
- outputting a report of particle image classification for the dataset of particle images.

14. The method of Claim 13 further comprising the step of augmenting data of a training dataset used for comparison with the particle images of the dataset to build in instrument and sample variation into the training dataset.

15. The method of Claim 13 further comprising the step of detecting anomalies of the particle images of the dataset with an anomaly detection AI model arranged to detect images that are inconsistent with images known to be of the class the image is assigned during preliminary image classification.

16. The method of Claim 15 further comprising the step of reclassifying into a second particle image type a particle image initially classified into a first particle image type.

17. The method of Claim 16 further comprising the step of generating fake images of particle images to be classified, wherein the generated fake images are used to improve the detection of anomalies of the particle images classified.

18. The method of Claim 13 including the step of classifying into two different particle image types, protein aggregate particle images and silicone oil droplet particle images.
